Europäisches Patentamt

European Patent Office

Office européen des brevets

(19)

(11) Veröffentlichungsnummer : **0 089 583**
**B1**

(12) **EUROPÄISCHE PATENTSCHRIFT**

(45) Veröffentlichungstag der Patentschrift :
09.10.85

(21) Anmeldenummer : 83102442.7

(22) Anmeldetag : 12.03.83

(51) Int. Cl.⁴ : **C 23 C 8/10**, C 23 C 14/58,
C 23 C 16/56, H 01 L 31/04

(54) Verfahren zur Erzeugung von solarselektiven Schichten.

(30) Priorität : 20.03.82 DE 3210367

(43) Veröffentlichungstag der Anmeldung :
28.09.83 Patentblatt 83/39

(45) Bekanntmachung des Hinweises auf die Patenterteilung : 09.10.85 Patentblatt 85/41

(84) Benannte Vertragsstaaten :
CH DE FR GB IT LI

(56) Entgegenhaltungen :
DE-A- 3 106 352
US-A- 4 189 331

(73) Patentinhaber : Ruhrchemie Aktiengesellschaft
Bruchstrasse 219
D-4200 Oberhausen 13 (DE)

**M.A.N. MASCHINENFABRIK AUGSBURG-NÜRNBERG
Aktiengesellschaft
Dachauer Strasse 667 Postfach 50 06 20
D-8000 München 50 (DE)**

(72) Erfinder : **Cornils, Boy, Dr. Dipl.-Chem.
Friedrich-Ebert-Strasse 45
D-4220 Dinslaken (DE)**
Erfinder : **Weber, Jürgen, Dr. Dipl.-Chem.
Bunsenstrasse 17
D-4200 Oberhausen 13 (DE)**
Erfinder : **Tihanyi, Bela, Dr. Dipl.-Chem.
Arndtstrasse 87
D-4200 Oberhausen 1 (DE)**
Erfinder : **DeWin, Werner, Dipl.-Ing.
Eickenhof 53
D-4220 Dinslaken (DE)**

(74) Vertreter : **Reichelt, Karl-Heinz, Dr.
m. Br. Ruhrchemie Aktiengesellschaft Abt. PLD Postfach 13 01 60
D-4200 Oberhausen 13 (DE)**

**Beschreibung**

Die vorliegende Erfindung betrifft ein Verfahren zur Erzeugung solarselektiver Schichten auf geeigneten Substraten zur Umwandlung der Sonnenstrahlung in thermische Energie.

Die Nutzung der Sonnenstrahlung zur Erzeugung thermischer Energie gewinnt zunehmend Bedeutung. Zur Erreichung dieses Zieles sind eine Reihe Vorrichtungen bekannt, die je nach Anwendungsgebiet für verschiedene Temperaturbereiche ausgelegt sind.

Die Umwandlung der Sonnenenergie in Wärme läßt sich dem gewünschten Temperaturniveau entsprechend mit flachen oder konzentrierenden Kollektoren durchführen. Der nichtreflektierte, sichtbare Anteil der Sonnenstrahlung wird dabei an der Oberfläche der Kollektoren durch schwarze Schichten absorbiert und in thermische Energie umgewandelt. Die Temperatur der Wandleroberfläche erhöht sich bei der Umwandlung und der Wandler strahlt Energie höherer Wellenlänge als er absorbiert hat, in die Umgebung zurück.

Bei herkömmlichen Beschichtungen, z. B. schwarzen Lacken, absorbiert die Oberfläche nicht nur, sondern emittiert auch in hohem Maße Wärmestrahlung. Für Kollektoren mit niedrigem Temperaturniveau, d. h. unter 100 °C, ist der Energiegewinn trotz dieser starken Emission zufriedenstellend. Für konzentrierende Kollektorsysteme mit höherem Temperaturniveau reicht dagegen die Wirksamkeit von Lackbeschichtungen nicht aus.

Um mit einem System die wirtschaftlichen Anforderungen in dem Temperaturbereich oberhalb 200 °C zu erreichen, ist es erforderlich, Beschichtungen zu verwenden, die Sonnenlicht gut absorbieren, aber gleichzeitig Wärmestrahlung (infrarote Strahlung) möglichst wenig emittieren. Als selektiv bezeichnet man Schichten hoher Absorption ($\alpha$) und geringer Emission ($\epsilon$). $\alpha$ soll größer oder gleich 0,85 und $\epsilon$ kleiner oder gleich 0,25 sein. Je größer $\alpha$ und je geringer $\epsilon$ ist, desto besser ist die Selektivität, also der Quotient $\alpha/\epsilon$ der Oberfläche.

Darüber hinaus wird angestrebt, bei möglichst hohen Temperaturen zu arbeiten, weil hohe Temperaturen für viele Zwecke eine bessere Nutzung der aufgefangenen Energie erlauben.

Die Herstellung solarselektiver Schichten ist bekannt. Sie kann nach verschiedenen Techniken erfolgen, z. B. durch Abscheidung von Feststoffen wie Metallen, durch thermische Zersetzung gasförmiger Stoffe auf Substratoberflächen (Chemical Vapor Depostion), durch Zerstäuben von Feststoffen oder auf elektrochemischem Wege. Die Schichten liegen überwiegend als Metalloxide vor, die man entweder durch Abscheidung der Metalle in oxidierender Atmosphäre oder durch nachträgliche Oxidation einer in nicht oxidierender Atmosphäre abgeschiedenen Metallschicht erhält. Die Oxidation kann z. B. mit Chromsäure, Wasserstoffperoxid oder sauerstoffhaltigen Gasen bei höherer Temperatur und unter Normaldruck durchgeführt werden (vgl. z. B. van der Leij : Sun, New York 1978, Seiten 837-841).

Daneben verwendet man auch Absorber, die durch Oxidation des Kollektors erhalten werden. Beispiele für solche Beschichtungen sind oxidierte Kupfer-, Aluminium- oder Stahlunterlagen. Sie sind zwar schwarz, es fehlt ihnen aber oft eine ausreichende Selektivität und häufig zeigen sie geringe Haftfähigkeit.

Es bestand daher die Aufgabe, Absorberschichten mit möglichst hoher Selektivität herzustellen, die auch im höheren Temperaturbereich thermisch beständig sind und die die Mängel der bekannten Schichten nicht aufweisen.

Erfindungsgemäß wird diese Aufgabe gelöst durch ein Verfahren zur Herstellung solarselektiver Schichten zur Umwandlung von Sonnenstrahlung in thermische Energie mit Hilfe einer auf der Oberfläche des Wandlers aufgebrachten Metalloxidschicht. Es ist dadurch gekennzeichnet, daß auf dem Wandler zunächst eine Metallschicht abgeschieden wird, die anschließend unter Drücken zwischen 5 und 25 MPa und bei Temperaturen zwischen 100 und 400 °C oxidiert wird.

Das neue Verfahren eignet sich zur Herstellung von solaraktiven Schichten aus allen Metallen, die für diesen Zweck nach dem Stand der Technik angewandt werden können. Besonders geeignet sind Kobalt und/oder Nickel und ferner Chrom, Wolfram und Molybdän. Üblicherweise beträgt die Dicke der Metallschichten auf dem Substrat weniger als 10 $\mu$m, insbesondere 0,3 bis 3,0 $\mu$m. Sehr bewährt hat sich die Herstellung der Metallschichten durch elektrolytische Abscheidung.

Die Oxidation der auf dem Substrat aufgetragenen Metallschicht erfolgt nach der neuen Arbeitsweise unter Druck mit einem unter den Reaktionsbedingungen gasförmigen Oxidationsmittel. Hierzu gehören Sauerstoff und sauerstoffhaltige Gasgemische sowie solche Gase, die bei den angewandten Temperaturen gegenüber den auf dem Substrat aufgetragenen Metallen als Oxidationsmittel wirken, wie Schwefeldioxid, Schwefeltrioxid und Stickstoffoxide.

Die Oxidation der Metallschicht wird bei Temperaturen zwischen 100 und 400 °C durchgeführt und bei Drücken zwischen 5 und 25 MPa.

Die technische Realisierung des neuen Verfahrens erfolgt in Druckapparaturen, die der Form des beschichteten Körpers angepaßt sind, beispielsweise Druckrohre oder Autoklaven. Rohrförmige Wandler, die in der Solartechnologie häufig Anwendung finden, können in technischem Maßstab in einem Druckrohr oxidiert werden, das für einen oder mehrere dieser rohrförmigen Wandler eingerichtet ist. Die Einspeisung des oxidierenden Gases kann von einer, aber auch von mehreren Stellen erfolgen. Bei geringer Reaktionsgeschwindigkeit ist es vorteilhaft, das Oxidationsgas im Kreislauf zu führen.

Überraschenderweise liefert das neue Verfahren solarselektive Schichten hoher Selektivität. Allgemein gilt, daß bei Durchführung der Oxidation mit steigendem Druck und steigender Temperatur die Selektivität der Schichten erhöht wird. Darüber hinaus weisen die Schichten auch eine hervorragende Haftfestigkeit auf.

In den folgenden Beispielen wird das erfindungsgemäße Verfahren näher erläutert. Die Ergebnisse der Versuche sind in den Tabellen 1 und 2 zusammengestellt.

## Beispiele 1 bis 3

Die auf eine mit 5 μm dicker Glanznickelschicht vernickelten Probekörper aus Stahl ST 37 als Substrat aus Nickelcitrat elektrochemisch abgeschiedene Nickelschicht von 0,3-0,5 μm Dicke wird in einem Autoklaven bei unterschiedlichen Temperaturen und Drücken mit Luft bzw. $O_2$ oxidiert. Die Behandlungszeit beträgt jeweils 24 Stunden.

## Beispiel 4 (Vergleich)

In diesem Beispiel werden die Eigenschaften einer Nickelschicht beschrieben, die entsprechend den Beispielen 1 bis 3 hergestellt jedoch nicht oxidiert wird.

## Beispiel 5 (Vergleich)

In diesem Beispiel werden die Eigenschaften einer Nickelschicht beschrieben, die ebenfalls entsprechend den Beispielen 1 bis 3 hergestellt wird, bei der jedoch abweichend von diesen Versuchen die Oxidation drucklos in einem Luft-Umwälzofen erfolgt.

Versuchsbedingungen und Ergebnisse der Beispiele 1 bis 5 sind in Tabelle 1 zusammengestellt.

## Beispiele 6 und 7

Die auf eine mit 5 μm dicker Glanznickelschicht vernickelten Probekörper aus Stahl ST 37 als Substrat aus Cobaltcitrat elektrochemisch abgeschiedene Cobaltschicht von 0,3-0,5 μm Dicke eines Probekörpers wird in einem Autoklaven bei unterschiedlichen Temperaturen und Drücken mit Luft bzw. $O_2$ oxidiert. Die Behandlungszeit beträgt jeweils 24 Stunden.

## Beispiel 8 (Vergleich)

In diesem Beispiel werden die Eigenschaften einer Cobaltschicht beschrieben, die entsprechend den Beispielen 6 und 7 hergestellt jedoch nicht oxidiert wird.

## Beispiel 9 (Vergleich)

In diesem Beispiel werden die Eigenschaften einer Cobaltschicht beschrieben, die ebenfalls entsprechend den Beispielen 6 und 7 hergestellt wird, bei der jedoch abweichend von diesen Versuchen die Oxidation drucklos in einem Luft-Umwälzofen erfolgt.

Versuchsbedingungen und Ergebnisse sind in Tabelle 2 zusammengestellt.

(Siehe Tabellen Seite 4 f.)

3

## Tabelle 1

### Abhängigkeit von $\alpha$ und $\varepsilon$ von den Oxidationsparametern bei Ni-Schichten

|  | Beispiel 1 | Beispiel 2 | Beispiel 3 | Beispiel 4 | Beispiel 5 (Vergleich) |
|---|---|---|---|---|---|
| Temperatur (°C) | 150 | 235 | 280 | - | 400 |
| Druck (MPa) | 15 | 20 | 10 | - | - |
| Oxidationsmedium | Luft | $O_2$ | $O_2$ | - | Luft |
| $\alpha$ | 0,97 | 0,97 | 0,96 | 0,94 | 0,94-0,96 |
| $\varepsilon$ | 0,26 | 0,22 | 0,18 | 0,29 | 0,32-0,47 |

## Tabelle 2

### Abhängigkeit von $\alpha$ und $\varepsilon$ von den Oxidationsparametern bei Co-Schichten

|  | Beispiel 6 | Beispiel 7 | Beispiel 8 | Beispiel 9 |
|---|---|---|---|---|
| Temperatur (°C) | 235 | 280 | - | 400 |
| Druck (MPa) | 20 | 10 | - | - |
| Oxidationsmedium | Luft | $O_2$ | - | Luft/$O_2$ |
| $\alpha$ | 0,97 | 0,96 | 0,95 | 0,95 |
| $\varepsilon$ | 0,15 | 0,11 | 0,21 | 0,20 |

### Patentansprüche

1. Verfahren zur Erzeugung von solarselektiven Schichten zur Umwandlung von Sonnenstrahlung in thermische Energie mit Hilfe einer auf der Oberfläche des Wandlers aufgebrachten Metalloxidschicht, dadurch gekennzeichnet, daß auf dem Wandler zunächst eine Metallschicht abgeschieden wird, die anschließend unter Drücken zwischen 5 und 25 MPa und bei Temperaturen zwischen 100 und 400 °C oxidiert wird.

2. Verfahren nach Anspruch 1, dadurch gekennzeichnet, daß die Oxidation mit einem oxidierenden Gas oder Gasgemisch erfolgt.

3. Verfahren nach Anspruch 2, dadurch gekennzeichnet, daß die Oxidation mit reinem Sauerstoff durchgeführt wird.

4. Verfahren nach Anspruch 1, dadurch gekennzeichnet, daß die Metallschicht eine Ni- und/oder Co-Schicht ist.

5. Verfahren nach Anspruch 4, dadurch gekennzeichnet, daß die Metallschicht elektrolytisch abgeschieden wird.

### Claims

1. A process for the production of solar-selective layers for the conversion of solar radiation into thermal energy with the aid of a metal oxide layer applied to the surface of the converter characterised in that a metal layer is first deposited on the converter and then oxidised at pressures between 5 and 25 mPa and temperatures between 100 and 400 °C.

2. A process according to claim 1 characterised in that an oxidising gas or gas mixture is used for oxidation.

3. A process according to claim 2 characterised in that oxidation is carried out with pure oxygen.

4. A process according to claim 1 characterised in that the metal layer is a Ni and/or Co-layer.

5. A process according to claim 4 characterised in that the metal layer is deposited electrolytically.

### Revendications

1. Procédé pour la production de couches solaires sélectives pour la conversion du rayonnement solaire en énergie thermique à l'aide d'une couche d'oxyde métallique déposée sur la surface du convertisseur, caractérisé en ce que l'on applique d'abord sur le convertisseur une couche métallique, qui est ensuite oxydée sous des pressions comprises entre 5 et 25 MPa et à des températures comprises entre 100 et 400 °C.

2. Procédé selon la revendication 1, caractérisé en ce que l'oxydation est effectuée avec un gaz ou mélange gazeux oxydant.

3. Procédé selon la revendication 2, caractérisé en ce que l'oxydation est mise en œuvre par l'oxygène pur.

4. Procédé selon la revendication 1, caractérisé en ce que la couche métallique est une couche de Ni et/ou de Co.

5. Procédé selon la revendication 4, caractérisé en ce que la couche métallique est déposée électrolytiquement.